# EUROPÄISCHE PATENTSCHRIFT

(11) **EP 3 284 181 B1**
(45) Veröffentlichungstag und Bekanntmachung des Hinweises auf die Patenterteilung: **04.11.2020**
(21) Anmeldenummer: 16727178.2
(22) Anmeldetag: 02.06.2016
(51) Int. Cl.: H04B 3/54, B61L 15/00, B61L 3/16, H04B 3/60, B61L 3/18

(54) **WECHSEL ZWISCHEN SEGMENTEN EINES NETZWERKS**
CHANGING BETWEEN SEGMENTS OF A NETWORK
CHANGEMENT ENTRE DES SEGMENTS D'UN RÉSEAU

(30) Priorität: 07.07.2015 DE 102015212674
(43) Veröffentlichungstag der Anmeldung: 21.02.2018
(73) Patentinhaber: Siemens Aktiengesellschaft, 80333 München (DE)
(72) Erfinder: LINZMAIER, Klaus-Peter, 73650 Winterbach (DE); MITTNACHT, Tobias, 70190 Stuttgart (DE)
(86) Internationale Anmeldenummer: PCT/EP2016/062524
(87) Internationale Veröffentlichungsnummer: WO 2017/005422

(56) Entgegenhaltungen:
- EP-A1- 2 849 388

## Beschreibung

Die Erfindung betrifft einen beweglichen Netzwerkteilnehmer, eine Segment-Anordnung, ein Verfahren und eine Modemanordnung zum Wechsel zwischen Segmenten eines Netzwerks.

Ein derartiger beweglicher Netzwerkteilnehmer, die Segment-Anordnung, das Verfahren und die Modemanordnung kommen beispielsweise in einem Schleifleiternetzwerk einer industriellen Hängebahn oder auch Elektrohängebahn-Anlagen (EHB-Anlagen) zum Einsatz. Weitere Anwendungen existieren beispielsweise bei Regalbediengeräten, Flurförderzeugen, Krananlagen, Aufzügen und Hebezeugen, Verschiebewägen und Fahrgeschäften. Elektrohängebahnen bestehen aus einer stationären Anlagensteuerung und Energieversorgung, dem Schienensystem und den mobilen Fahrzeugen. Die mobilen Fahrzeuge sind entweder über Kontaktanordnungen oder Abnehmer, insbesondere Schleifer, mit festen Stromschienen, Schleifleitern oder Schleifringen verbunden oder es werden Schleppkabel eingesetzt.

Die EP 2 849 388 A1 offenbart einen Netzwerkteilnehmer gemä den Merkmalen des Oberbegriffs des Anspruchs 1.

Der Erfindung liegt die Aufgabe zugrunde, einen beweglichen Netzwerkteilnehmer, eine Segment-Anordnung, ein Verfahren und eine Modemanordnung anzugeben, die einen Wechsel zwischen zwei Segmenten eines Netzwerks einfach und effizient ermöglichen.

Diese Aufgabe wird durch ein Verfahren mit den im Anspruch 1 angegebenen Merkmalen gelöst.

Dazu wird ein beweglicher Netzwerkteilnehmer zur Verwendung in einem leitungsgebundenen Netzwerk, insbesondere in einem Schleifleiternetzwerk einer Elektro-Hängebahn, angegeben, wobei das leitungsgebundene Netzwerk je mindestens ein erstes Segment und ein zweites Segment aufweist.

Der bewegliche Netzwerkteilnehmer weist jeweils ein erstes Slave-Modem, ein zweites Slave-Modem, eine erste Kontaktanordnung sowie eine zweite Kontaktanordnung auf. Die Slave-Modems sind zur Kommunikation mit je mindestens einem ersten Master-Modem und/oder einem zweiten Master-Modem über die Kontaktanordnungen und die Segmente vorgesehen. Der bewegliche Netzwerkteilnehmer ist zur Bewegung entlang der Segmente vorgesehen, wobei die Kontaktanordnungen des beweglichen Netzwerkteilnehmers derart angeordnet sind, dass beim Wechsel vom ersten Segment in das zweite Segment zumindest eine der Kontaktanordnungen mit dem ersten Segment und zumindest eine weitere Kontaktanordnung mit dem zweiten Segment in Verbindung ist. Modems sind dabei die Geräte, die eine Kommunikation über die Segmente und die beweglichen Kontaktanordnungen ermöglichen. Die Modems können dabei beispielsweise auf einer Seite eine Ethernet-Schnittstelle aufweisen und auf der Seite der Segmente eine Powerline-Kommunikation realisieren.

Die Erfindung basiert auf der Erkenntnis, dass ein erfindungsgemäßer beweglicher Netzwerkteilnehmer die segmentseitige Komplexität deutlich verringert und damit die Komplexität und die Kosten der gesamten Anlage vorteilhaft verringert. Der bewegliche Netzwerkteilnehmer kann dabei beispielsweise ein Fahrzeug einer Elektrohängebahn sein. Die Segmente wären dann als Schleifleiternetzwerksegmente ausgebildet, die beispielsweise innerhalb der Schienen der Elektrohängebahn laufen. Aufgrund der potenziell großen Ausdehnung solcher Netzwerke ist es nötig, mehrere solcher Segmente vorzusehen, um immer eine ausreichend hohe Signalstärke für die Kommunikation zwischen einem zentralen Steuergerät und den Fahrzeugen zu sichern. Daher ist es nötig, dass der bewegliche Netzwerkteilnehmer von einem ersten in ein zweites Segment oder zurück wechseln kann. Die Kontaktanordnungen können dabei Schleifer sein, über die der bewegliche Netzwerkteilnehmer mit dem festen und unbeweglichen Teil des Netzwerks in Verbindung steht.

In einer weiteren vorteilhaften Ausführungsform weist der bewegliche Netzwerkteilnehmer einen Slave-PRP-Manager auf, der zum Ansteuern und/oder Auslesen der Slave-Modems auf Basis eines Redundanzprotokolls, insbesondere eines Parallel Redundancy Protocol gemäß IEC 62439, ausgebildet ist. Die redundante Ansteuerung erhöht die Zuverlässigkeit des beweglichen Netzwerkteilnehmers und ermöglicht im Problemfall auch den nahtlosen Notbetrieb mit nur einem Modem.

In einer weiteren vorteilhaften Ausführungsform weist der bewegliche Netzwerkteilnehmer einen Modem-Verteiler auf, der zum Herstellen mindestens einer Verbindung zwischen den Kontaktanordnungen (K1, K2) und den Slave-Modems (SM1, SM2) ausgebildet ist. Der Modem-Verteiler bietet den Vorteil, dass die dem beweglichen Netzwerkteilnehmer zugeordneten Slave-Modems beliebig den entsprechenden Kontaktanordnungen zugeschaltet werden können. Dies ermöglicht es auch, dass das Fahrzeug einfach und schnell seine Bewegungsrichtung ändern kann, ohne erst eine Verbindungsübergabe zwischen den beiden Slave-Modems durchführen zu müssen. Der Modemverteiler kann dabei als rein elektromechanischer Umschalter, als Switch oder sogar als Softwareschalter in der Ansteuerung der Modem ausgebildet sein. Weitere Vorteile können sich ergeben, wenn auch der Modemverteiler mit einem Redundanzprotokoll von einem Slave-PRP-Manager angesteuert wird.

In einer weiteren vorteilhaften Ausführungsform sind die Kontaktanordnungen des beweglichen Netzwerkteilnehmers jeweils als Einzel- und/oder Doppelschleifer ausgebildet. Je nach Gestaltung der Segmente kann es sich als vorteilhaft erweisen, die Kontaktanordnungen als Einzel- und/oder Doppelschleifer auszuführen. Doppelschleifer haben den Vorteil, dass sie eine prinzipiell größere Kontaktfläche aufweisen, wohingegen die Einzelschleifer eine geringere Reibung aufweisen.

Die Aufgabe wird weiterhin durch ein Verfahren zum Wechsel eines beweglichen Netzwerkteilnehmers von einem ersten Segment in ein zweites Segment eines leitungsgebundenen Netzwerks gelöst. Das Slave-Modem, das mit der in Bewegungsrichtung des beweglichen Netzwerkteilnehmers vorne angeordneten Kontaktanordnung in Verbindung steht, erkennt den Segmentübergang und baut eine Verbindung zum Master-Modem des zweiten Segments auf, so dass beim Wechsel vom ersten Segment in das zweite Segment zumindest eine der Kontaktanordnungen mit dem ersten Segment und zumindest eine weitere Kontaktanordnung mit dem zweiten Segment in Verbindung steht. Dieses Verfahren ermöglicht es in Verbindung mit dem beweglichen Netzwerkteilnehmer, dass das Segment einfach und schnell gewechselt werden kann. Der Wechsel des Segments ist dabei unabhängig von der Bewegungsrichtung des beweglichen Netzwerkteilnehmers möglich. Sehr vorteilhaft ist es, wenn die Kontaktanordnung, die zuerst in ein neues Segment einfährt, nicht die aktive Verbindung trägt. Es ist ebenso denkbar, dass die Slave-Modems des beweglichen Netzwerkteilnehmers jeweils festen Master-Modems zugeordnet sind. Damit wäre sicherzustellen, dass beim Wechsel des Segments das richtige Modem mit der richtigen Kontaktanordnung verbunden ist.

In einer weiteren vorteilhaften Ausführungsform steht das Slave-Modem, das mit der in Bewegungsrichtung des beweglichen Netzwerkteilnehmers vorne angeordneten Kontaktanordnung in Verbindung steht, nach dem Wechsel beider Kontaktanordnungen in das zweite Segment, über beide Kontaktanordnungen mit dem zweiten Segment in Verbindung. Dies ermöglicht es unter anderem zu erkennen, dass der bewegliche Netzwerkteilnehmer sich in dem zweiten Segment befindet und die Kontaktanordnung, die sich in Fahrtrichtung vorne befindet, kann schnell und fast ohne Verzögerung wieder freigegeben werden. Sollte der bewegliche Netzwerkteilnehmer schnell seine Richtung ändern müssen, kann auch die Kontaktanordnung freigegeben werden, die dann mit der Richtungsänderung vorne läge.

In einer weiteren vorteilhaften Ausführungsform erkennt das Slave-Modem, das mit der in Bewegungsrichtung des beweglichen Netzwerkteilnehmers hinten angeordneten Kontaktanordnung in Verbindung steht, den Segmentübergang, baut eine Verbindung zum Master-Modem des zweiten Segments auf und führt eine Verbindungsübergabe mit dem Slave-Modem, das mit der in Bewegungsrichtung des beweglichen Netzwerkteilnehmers vorne angeordneten Kontaktanordnung in Verbindung steht, durch. Dies ist insbesondere dann von Vorteil, wenn die Slave-Modems mit jedem beliebigen Segment verbindbar sind. So erhöht sich der Freiheitsgrad, welche Kontaktanordnung mit welchem Modem und mit welchem Segment verbunden werden kann weiter. Dadurch wird das System noch flexibler.

In einer weiteren Ausführungsform wird die Verbindungsübergabe nach einer festlegbaren Wartezeit abgeschlossen, während der die beiden Slave-Modems mit dem zweiten Master-Modem in Verbindung stehen. Die festlegbare Wartezeit kann dabei so konfiguriert werden, dass einerseits sichergestellt ist, dass das Fahrzeug bei einem Richtungswechsel keine Änderung der Verbindung und der Kontaktanordnungen nötig wird, andererseits kann mit der Wartezeit auch eine optimale Zeit eingestellt werden, mit der sichergestellt ist, dass die Übergabe der Verbindung so schnell wie möglich geschieht.

Die Aufgabe wird weiterhin gelöst durch eine Segment-Anordnung zur Verwendung mit einem beweglichen Netzwerkteilnehmer wobei die Segment-Anordnung mindestens ein erstes Master-Modem, mindestens ein zweites Master-Modem, mindestens ein erstes Segment und mindestens ein zweites Segment aufweist. Die Segmente sind dabei mit dem beweglichen Netzwerkteilnehmer über die Kontaktanordnungen verbunden. Der bewegliche Netzwerkteilnehmer ist also über die Segmente und die Master-Modems in ein übergeordnetes Netzwerk eingebunden. Mit der einfachen Segmentanordnung ist es nun möglich, den erfindungsgemäßen beweglichen Netzwerkteilnehmer einfach und effizient zu betreiben.

In einer weiteren Ausführungsform weist die Segment-Anordnung einen PRP-Manager zum Ansteuern und/oder Auslesen der Master-Modems auf Basis eines Redundanzprotokolls, insbesondere auf Basis eines Parallel Redundancy Protocol gemäß IEC 62439, auf. Dies hat neben der Redundanz und der dadurch erreichbaren höheren Sicherheitsstufe den weiteren Vorteil, dass Daten auch während des störungsfreien Betriebs redundant an den beweglichen Netzwerkteilnehmer übertragen werden können. Dies erhöht die Zuverlässigkeit weiter.

In einer weiteren Ausführungsform erstrecken sich die Segmente längs, grenzen aneinander und/oder bilden eine an den Segmentgrenzen unterbrochene und überlappungsfreie Strecke. Dies ist besonders vorteilhaft, da der Aufbau der Segmentanordnungen und des gesamten Netzwerks auf diese Weise deutlich vereinfacht wird. Auch die Bewegung des beweglichen Netzwerkteilnehmers entlang der Segmente wird so vereinfacht.

In einer weiteren Ausführungsform sind zwischen den Segmenten neutrale Segmente angeordnet. Neutrale Segmente dabei sind mit keinem Master-Modem und keinem Segment verbunden. Dies hat den Vorteil, dass die Kontaktanordnung, die zuerst mit dem neutralen Segment in Verbindung kommt, keine Verbindung mehr zu einem Master-Modem hat. Damit hat auch das mit dieser Kontaktanordnung aktuell in Verbindung stehende Modem keine Verbindung mehr und kann dadurch einen Segmentübergang einfach und sicher erkennen.

In einer weiteren vorteilhaften Ausführungsform sind an den Grenzen der Segmente Terminierungen angebracht. Terminierungen sind dabei Elemente, die an den Enden der Segmente angebracht werden und die Signale des Segments, an denen sie angebracht sind, in Richtung des nächsten Segments dämpfen. Dies hat den großen Vorteil, dass ein Übersprechen zwischen den Segmenten deutlich verringert wird und die gesamte Kommunikationsqualität erhöht wird. Vor allem während des Segmentübergangs profitiert die Verbindungsqualität von den Terminierungen, da das Fahrzeug hier in beiden Segmenten steht und so ein Übersprechen ohne Terminierungen sehr negativ auffallen würde.

In einer weiteren Ausführungsform weist die Segment-Anordnung eine Steuerung auf, die zur Kommunikation mit und zur Ansteuerung einer Fahrsteuerung des beweglichen Netzwerkteilnehmers ausgebildet ist. Auf diese Art und Weise kann die Segmentanordnung einfach und effektiv zur Fahrsteuerung des beweglichen Netzwerkteilnehmers erweitert werden.

Die Aufgabe wird weiterhin durch eine Modemanordnung zur Verwendung in oder mit einem erfindungsgemäßen beweglichen Netzwerkteilnehmer gelöst, die mindestens zwei Modems aufweist.

Im Folgenden wird die Erfindung anhand der in den Figuren dargestellten Ausführungsbeispiele näher beschrieben und erläutert. Es zeigen:
- FIG 1: eine Ausführungsform eines Netzwerks mit einem beweglichen Netzwerkteilnehmer und
- FIG 2 - 6: beispielhaft einen Segmentübergang eines beweglichen Netzwerkteilnehmers.

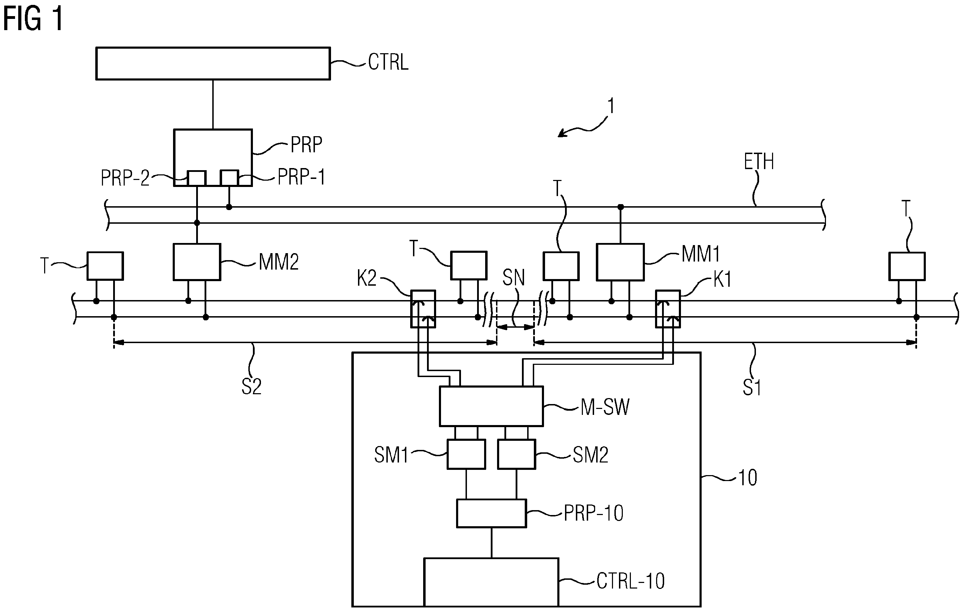

FIG 1 zeigt ein Ausführungsbeispiel eines leitungsgebundenen Netzwerks 1, in dem eine Steuerung CTRL mit einer Fahrsteuerung CTRL-10 eines beweglichen Netzwerkteilnehmers 10 kommuniziert. Bei dem beweglichen Netzwerkteilnehmer 10 könnte es sich um ein Fahrzeug einer Elektrohängebahn handeln. Die Steuerung CTRL ist mit einem PRP-Manager PRP verbunden. Der PRP-Manager weist in diesem Fall zwei Ausgänge PRP-1 und PRP-2 auf. Der PRP-Manager PRP ist mit einer Ethernet-Verbindung ETH verbunden. Über diese Verbindung sind ein erstes und ein zweites Master-Modems MM1, MM2 mit dem PRP-Manager und der Steuerung CTRL verbunden. Die Ethernet Verbindung muss dabei nicht als Ethernet ausgeführt sein, sondern kann in Form von jeder weiteren Netzwerktechnologie ausgebildet sein. Jedes der Master-Modems MM1, MM2 versorgt je ein Segment S1, S2. Dabei ist es in diesem Fall so, dass das Master-Modem MM1 das Segment S1 versorgt und das Master-Modem MM2 das Segment S2 versorgt. Die Segmente S1, S2 sind aus zwei einzelnen Leitern aufgebaut. Die Enden der Segmente, bzw. die Segmentgrenzen, sind jeweils mit Terminierungen T versehen. Zwischen den Segmenten S1 und S2 ist ein neutrales Segment SN eingefügt. Das Segment SN ist in der Regel deutlich kürzer als die Segmente S1, S2. Mittels zweier Kontaktanordnungen K1, K2, die hier als doppelte Kontaktanordnungen K1, K2 ausgeführt sind, wird der bewegliche Netzwerkteilnehmer 10 mit den Segmenten verbunden. Der bewegliche Netzwerkteilnehmer 10 steht in diesem Fall über die Kontaktanordnung K1 mit Segment S1 und mit der Kontaktanordnung K2 mit Segment S2 in Verbindung. Der bewegliche Netzwerkteilnehmer 10 weist neben der Fahrsteuerung CTRL-10 einen Slave-PRP-Manager PRP-10 ein erstes und ein zweites Slave-Modem SM1, SM2 und einen Modem-Verteiler M-SW auf. Die Kontaktanordnungen K1, K2 sind über den Modem-Verteiler M-SW mit den Slave-Modem SM1, SM2 verbunden. Der Modem-Verteiler M-SW ist hier dargestellt als elektromechanischer Umschalter, dies ist aber nur zu Illustrationszwecken und könnte ebenso als rein elektrischer Switch oder als Softwarekomponente realisiert sein. Der Modem-Verteiler M-SW ist dabei in der Lage, jedes Slave-Modem SM1, SM2 mit jeder Kontaktanordnungen K1, K2 zu verbinden. Auch eine Verbindung von zwei Kontaktanordnungen K1, K2 mit einem Slave-Modem SM1, SM2 ist möglich, allerdings müssen sich dann beide Kontaktanordnungen K1, K2 auf demselben Segment S1 oder S2 befinden, da sonst ein Kurzschluss zweier Segmente S1, S2 die Folge wäre.

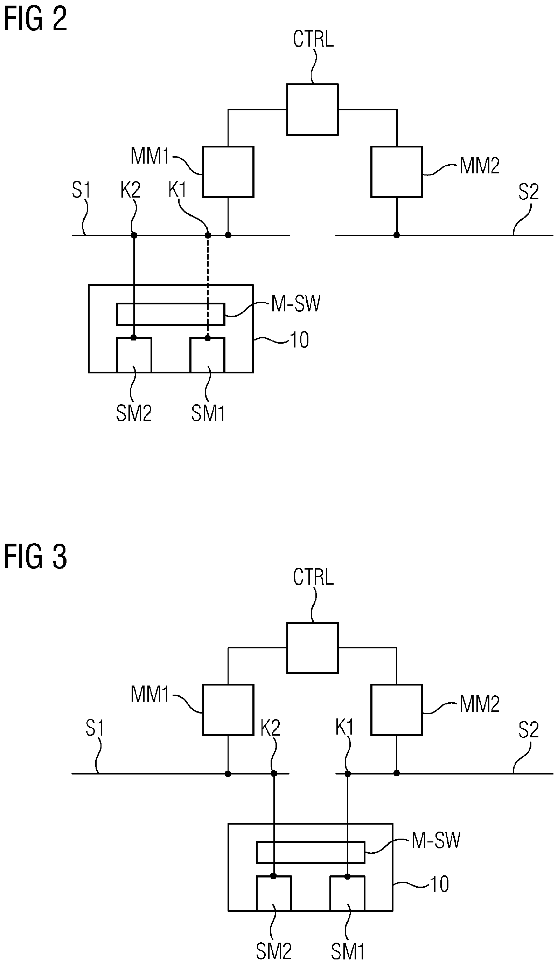

FIG 2 zeigt eine stark vereinfachte Darstellung eines leitungsgebundenen Netzwerks 1, mit einer zentralen Steuerung CTRL, zwei Master-Modems MM1, MM2, zwei Segmenten S1, S2, einem beweglichen Netzwerkteilnehmer 10, der einen Modem-Verteiler M-SW sowie zwei Slave-Modems SM1 und SM2 aufweist und der über zwei Kontaktanordnungen K1 und K2 mit dem ersten Segment S1 verbunden ist. Der Übersichtlichkeit halber wurde auf weitere Komponenten, wie beispielsweise die Fahrsteuerung CTRL-10, die in FIG 1 zu sehen ist, verzichtet. Die Verbindung der Kontaktanordnung K1 mit dem Slave-Modem SM1 ist über eine gestrichelte Linie dargestellt, was im Folgenden bedeuten soll, dass zwar eine Verbindung bestehen würde, diese aber inaktiv ist. Analog dazu ist die Kontaktanordnung K2 mit dem Slave-Modem SM2 über eine durchgehende Linie verbunden, was im Folgenden für eine aktive Verbindung stehen soll. In den folgenden Figuren wird sich nun der bewegliche Netzwerkteilnehmer 10 von der Ausgangsposition in FIG 2 vom ersten Segment S1 in das zweite Segment S2 bewegen.

FIG 3 zeigt nun die aus FIG 2 bekannte Anordnung, wobei sich der bewegliche Netzwerkteilnehmer 10 so weit bewegt hat, dass die erste Kontaktanordnung K1 nun mit dem zweiten Segment S2 in Verbindung steht und die zweite Kontaktanordnung K2 noch mit dem ersten Segment S1 in Verbindung steht. Die Verbindungen zwischen den Kontaktanordnungen K1, K2 mit dem jeweiligen Slave-Modem SM1, SM2 sind durchgehend eingezeichnet. D.h., es besteht mit dem Slave-Modem SM1 über die Kontaktanordnung K1 und das Segment S2 eine aktive Verbindung mit dem Master-Modem MM2 und zusätzlich über das Slave-Modem SM2 und die zweite Kontaktanordnung K2 über das erste Segment S1 eine Verbindung zu dem Master-Modem MM1. Eine aktive Verbindung muss in diesem Fall nicht heißen, dass über die jeweilige Verbindung auch Daten gesendet und empfangen werden. Dies bedeutet unter anderem, dass die Möglichkeit besteht, dass sich das jeweilige Slave-Modem SM1, SM2 in das entsprechende Netz des Master-Modems MM1, MM2 einbuchen kann. Es ist aber ebenso denkbar, dass unter Verwendung eines Redundanzprotokolls, wie beispielsweise des Parallel Redundancy Protocol, beide Verbindungen als redundante Verbindungen verwendet werden.

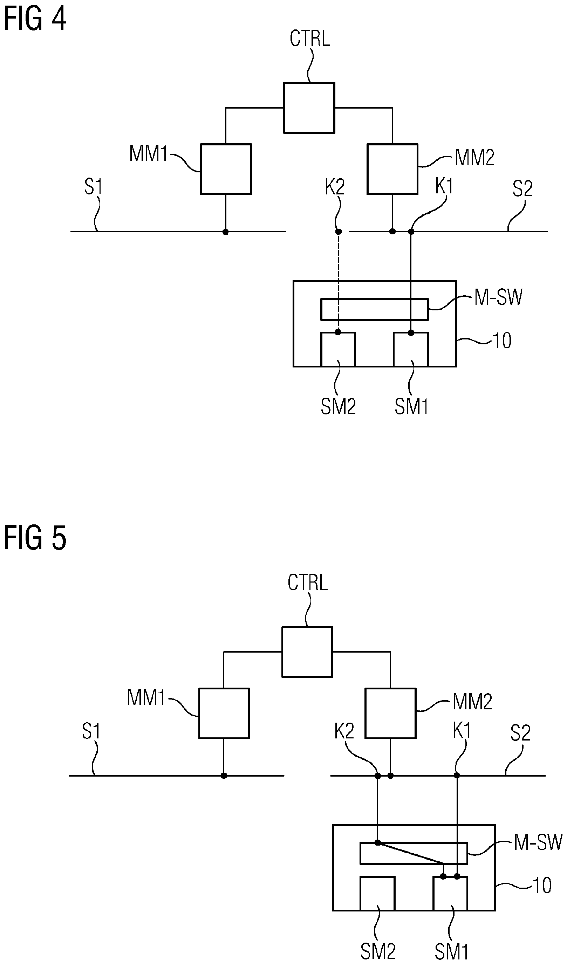

FIG 4 zeigt nun den Fall, bei dem sich der bewegliche Netzwerkteilnehmer 10 so weit fortbewegt hat, dass die zweite Kontaktanordnung K2 mit keinem der beiden Segmente S1 oder S2 mehr verbunden ist. Die Verbindung zwischen der Kontaktanordnung K2 und dem Slave-Modem S2 ist deshalb gestrichelt ausgeführt. Die Verbindung zwischen dem Steuergerät CTRL und dem beweglichen Netzwerkteilnehmer 10 wird also über das Master-Modem MM2, das zweite Segment S2, die erste Kontaktanordnung K1 und das erste Slave-Modem SM1 hergestellt. Nicht eingezeichnet aber in FIG 1 bereits gezeigt, wäre ein neutrales Segment SN denkbar, dass in dieser Position des beweglichen Netzwerkteilnehmers 10 mit der Kontaktanordnung K2 in Verbindung steht.

FIG 5 zeigt einen beweglichen Netzwerkteilnehmer 10, der sich nun so weit fortbewegt hat, dass beide Kontaktanordnungen K1, K2 mit dem zweiten Segment S2 verbunden sind. Darüber hinaus ist zu sehen, dass der Modem-Verteiler M-SW die Verbindung der zweiten Kontaktanordnung K2 nunmehr mit dem ersten Slave-Modem SM1 und nicht mehr mit dem zweiten Slave-Modem SM2 hergestellt hat. D.h., das erste Slave-Modem SM1 verfügt nun über eine Verbindung sowohl über die erste Kontaktanordnung K1 als auch über die zweite Kontaktanordnung K2 mit dem zweiten Segment S2.

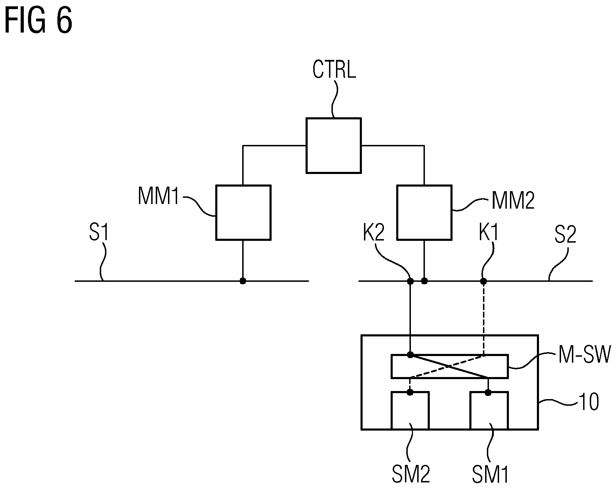

FIG 6 zeigt nun einen beweglichen Netzwerkteilnehmer 10, der sich noch immer vollständig im zweiten Segment S2 befindet. Die Verbindung der in diesem Fall hinten liegenden Kontaktanordnung K2 mit dem Slave-Modem SM1 bleibt bestehen. Die in Bewegungsrichtung vorne liegende Kontaktanordnung K1 steht nun nicht mehr mit dem Slave-Modem SM1 in Verbindung, sondern der Modem-Verteiler M-SW hat die Verbindung der ersten Kontaktanordnung K1 auf das zweite Slave-Modem SM2 umgeschaltet. So wäre die in Bewegungsrichtung vorne liegende Kontaktanordnung K1 nun für das Einfahren in ein neues Segment frei und der beschriebene Prozess könnte wiederholt werden.

Sollte der bewegliche Netzwerkteilnehmer 10 seine Bewegungsrichtung ändern, liegt die zweite Kontaktanordnung K2 nun in Bewegungsrichtung vorne. Es ist denkbar, dass der Modem-Verteiler M-SW die Verbindungen wieder umschaltet oder alternativ die Modems die aktive Verbindung von dem Slave-Modem SM1 auf das Slave-Modem SM2 per Software übergeben. Dies könnte beispielsweise mit einer kurzen Überlappphase geschehen und damit die in rückwärtiger Fahrrichtung vorne liegende Kontaktanordnung K2 zur Einfahrt in ein neues Segment vorbereiten.

Zusammenfassend betrifft die Erfindung einen beweglichen Netzwerkteilnehmer 10 zur Verwendung in einem leitungsgebundenen Netzwerk 1, insbesondere in einem Schleifleiternetzwerk einer Elektro-Hängebahn, wobei das leitungsgebundene Netzwerk 1 je mindestens ein erstes Segment S1 und ein zweites Segment S2 aufweist und wobei der bewegliche Netzwerkteilnehmer 10 jeweils ein erstes Slave-Modem SM1, ein zweites Slave-Modem SM2, eine erste Kontaktanordnung K1 sowie eine zweite Kontaktanordnung K2 aufweist. Um einen Wechsel zwischen zwei Segmenten eines Netzwerks einfach und effizient zu ermöglichen, wird vorgeschlagen die Slave-Modems SM1, SM2 zur Kommunikation mit je mindestens einem ersten Master-Modem MM1 und/oder einem zweiten Master-Modem MM2 über die Kontaktanordnungen K1, K2 und die Segmente S1, S2 vorzusehen, wobei der bewegliche Netzwerkteilnehmer 10 zur Bewegung entlang der Segmente S1, S2 vorgesehen ist, wobei die Kontaktanordnungen K1, K2 des beweglichen Netzwerkteilnehmers 10 derart angeordnet sind, dass beim Wechsel vom ersten Segment S1 in das zweite Segment S2 zumindest eine der Kontaktanordnungen K1, K2 mit dem ersten Segment S1 und zumindest eine weitere Kontaktanordnung K1, K2 mit dem zweiten Segment S2 in Verbindung ist.

## Patentansprüche

1. Beweglicher Netzwerkteilnehmer (10) zur Verwendung in einem leitungsgebundenen Netzwerk (1),
wobei das leitungsgebundene Netzwerk (1) je mindestens ein erstes Segment (S1) und ein zweites Segment (S2) aufweist, wobei der bewegliche Netzwerkteilnehmer (10) jeweils ein erstes Slave-Modem (SM1), ein zweites Slave-Modem (SM2), eine erste Kontaktanordnung (K1) sowie eine zweite Kontaktanordnung (K2) aufweist,
wobei die Slave-Modems (SM1, SM2) zur Kommunikation mit je mindestens einem ersten Master-Modem (MM1) und/oder einem zweiten Master-Modem (MM2) über die Kontaktanordnungen (K1, K2) und die Segmente (S1, S2) vorgesehen sind, wobei das erste Master-Modem (MM1) das erste Segment (S1) versorgt und das zweite Master-Modem (MM2) das zweite Segment (S2) versorgt, wobei der bewegliche Netzwerkteilnehmer (10) zur Bewegung entlang der Segmente (S1, S2) vorgesehen ist,
**dadurch gekennzeichnet, dass**
die Kontaktanordnungen (K1, K2) des beweglichen Netzwerkteilnehmers (10) derart angeordnet sind, dass beim Wechsel vom ersten Segment (S1) in das zweite Segment (S2) zumindest eine der Kontaktanordnungen (K1, K2) mit dem ersten Segment (S1) und zumindest eine weitere Kontaktanordnung (K1, K2) mit dem zweiten Segment (S2) in Verbindung ist.

2. Beweglicher Netzwerkteilnehmer nach Anspruch 1, aufweisend einen Slave-PRP-Manager (PRP-S), der zum Ansteuern und/oder Auslesen der Slave-Modems (SM1, SM2) auf Basis eines Parallel Redundancy Protocols gemäß IEEE 62439 ausgebildet ist.

3. Beweglicher Netzwerkteilnehmer nach einem der Ansprüche 1 oder 2, aufweisend einen Modem-Verteiler (M-SW), der zum Herstellen mindestens einer Verbindung zwischen den Kontaktanordnungen (K1, K2) und den Slave-Modems (SM1, SM2) ausgebildet ist.

4. Beweglicher Netzwerkteilnehmer nach einem der Ansprüche 1 bis 3, wobei die Kontaktanordnungen (K1, K2) jeweils als Einzel- und/oder Doppelschleifer ausgebildet sind.

5. Verfahren zum Wechsel eines beweglichen Netzwerkteilnehmers (10) nach einem der Ansprüche 1 bis 4 von einem ersten Segment (S1) in ein zweites Segment (S2) eines leitungsgebundenen Netzwerks (1), wobei ein erstes Master-Modem (MM1) das erste Segment (S1) versorgt und ein zweites Master-Modem (MM2) das zweite Segment (S2) versorgt,
wobei ein Slave-Modem (SM1, SM2), das mit der in Bewegungsrichtung des beweglichen Netzwerkteilnehmers (10) vorne angeordneten Kontaktanordnung (K1, K2) in Verbindung steht, den Segmentübergang erkennt und eine Verbindung zum Master-Modem (MM2) des zweiten Segments (S2) aufbaut,
**dadurch gekennzeichnet, dass**
beim Wechsel vom ersten Segment (S1) in das zweite Segment (S2) zumindest eine der Kontaktanordnungen (K1, K2) mit dem ersten Segment (S1) und zumindest eine weitere Kontaktanordnung (K1, K2) mit dem zweiten Segment (S2) in Verbindung steht.

6. Verfahren nach Anspruch 5, wobei das Slave-Modem (SM1, SM2), das mit der in Bewegungsrichtung des beweglichen Netzwerkteilnehmers (10) vorne angeordneten Kontaktanordnung (K1, K2) in Verbindung steht, nach dem Wechsel beider Kontaktanordnungen (K1, K2) in das zweite Segment (S2), über beide Kontaktanordnungen (K1, K2) mit dem zweiten Segment (S2) in Verbindung steht.

7. Verfahren nach Anspruch 5 oder 6, wobei das Slave-Modem (SM1, SM2), das mit der in Bewegungsrichtung des beweglichen Netzwerkteilnehmers (10) hinten angeordneten Kontaktanordnung (K1, K2) in Verbindung steht, den Segmentübergang erkennt, eine Verbindung zum Master-Modem (MM2) des zweiten Segments (S2) aufbaut und eine Verbindungsübergabe mit dem Slave-Modem (SM1, SM2), das mit der in Bewegungsrichtung des beweglichen Netzwerkteilnehmers (10) vorne angeordneten Kontaktan-ordnung (K1, K2) in Verbindung steht, durchführt.

8. Verfahren nach Anspruch 7, wobei die Verbindungsübergabe nach einer festlegbaren Wartezeit abgeschlossen wird, während der beide Slave-Modems mit dem zweiten Master-Modem (MM2) in Verbindung stehen.

9. Segment-Anordnung mit einem beweglichen Netzwerkteilnehmer (10) nach einem der Ansprüche 1 bis 4,
aufweisend mindestens ein erstes Master-Modem (MM1), mindestens ein zweites Master-Modem (MM2), mindestens ein erstes Segment (S1) und mindestens ein zweites Segment (S2), wobei das erste Master-Modem (MM1) das erste Segment (S1) versorgt und das zweite Master-Modem (MM2) das zweite Segment (S2) versorgt.

10. Segment-Anordnung nach Anspruch 9, aufweisend einen PRP-Manager (PRP) zum Ansteuern und/oder Auslesen der Master-Modems (MM1, MM2) auf Basis eines Parallel Redundancy Protocol gemäß IEEE 62439.

11. Segment-Anordnung (2) nach einem der Ansprüche 9 oder 10, wobei die Segmente (S1, S2) sich längs erstrecken, aneinander grenzen und/oder eine an den Segmentgrenzen unterbrochene und überlappungsfreie Strecke (S) bilden.

12. Segment-Anordnung nach einem der Ansprüche 9 bis 11, wobei zwischen den Segmenten (S1, S2) neutrale Segmente (SN), die mit keinem Master-Modem (MM1, MM2) und keinem Segment (S1, S2) verbunden sind, angeordnet sind.

13. Segment-Anordnung nach einem der Ansprüche 9 bis 12, wobei an den Grenzen der Segmente (S1, S2) Terminierungen (T) angebracht sind, die an den Enden der Segmente (S1, S2) angebracht sind und Signale des Segments (S1, S2), an denen sie angebracht sind, in Richtung des nächsten Segments dämpfen (S1, S2).

14. Segment-Anordnung nach einem der Ansprüche 9 bis 13, aufweisend eine Steuerung (CTRL), die zur Kommunikation mit und zur Ansteuerung einer Fahrsteuerung (CTRL-10) des beweglichen Netzwerkteilnehmers (10) ausgebildet ist.

## Claims

1. Mobile network subscriber (10) for use in a cabled network (1),
wherein the cabled network (1) has at least one first segment (S1) and at least one second segment (S2) in each case,
wherein the mobile network subscriber (10) has a first slave modem (SM1), a second slave modem (SM2), a first contact arrangement (K1) and a second contact arrangement (K2) in each case,
wherein the slave modems (SM1, SM2) are provided for communicating with at least one first master modem (MM1) and/or at least one second master modem (MM2) via the contact arrangements (K1, K2) and the segments (S1, S2), wherein the first master modem (MM1) supplies the first segment (S1) and the second master modem (MM2) supplies the second segment (S2),
wherein the mobile network subscriber (10) is provided for movement along the segments (S1, S2),
**characterised in that** the contact arrangements (K1, K2) of the mobile network subscriber (10) are arranged such that the change from the first segment (S1) to the second segment (S2) involves at least one of the contact arrangements (K1, K2) being connected to the first segment (S1) and at least one further contact arrangement (K1, K2) being connected to the second segment (S2).

2. Mobile network subscriber according to claim 1, having a slave PRP manager (PRP-S), which is embodied for controlling and/or reading out the slave modems (SM1, SM2) on the basis of a parallel redundancy protocol according to IEEE 62439.

3. Mobile network subscriber according to one of claims 1 or 2, having a modem distributor (M-SW), which is embodied for establishing at least one connection between the contact arrangements (K1, K2) and the slave modems (SM1, SM2).

4. Mobile network subscriber according to one of claims 1 to 3, wherein the contact arrangements (K1, K2) are each embodied as single and/or double collectors.

5. Method for changing a mobile network subscriber (10) according to one of claims 1 to 4 from a first segment (S1) into a second segment (S2) of a cabled network (1), wherein a first master modem (MM1) supplies the first segment (S1) and a second master modem (MM2) supplies the second segment (S2), wherein a slave modem (SM1, SM2), which is connected to the contact arrangement (K1, K2) arranged to the front in the direction of movement of the mobile network subscriber (10), identifies the segment transfer and establishes a connection with the master modem (MM2) of the second segment (SM2), **characterised in that**
a change from the first segment (S1) into the second segment (S2) involves at least one of the contact arrangements (K1, K2) being connected to the first segment (S1) and at least one further contact arrangement (K1, K2) being connected to the second segment (S2).

6. Method according to claim 5, wherein the slave modem (SM1, SM2), which is connected to the contact arrangement (K1, K2) arranged to the front in the direction of movement of the mobile network subscriber (10), is connected via both contact arrangements (K1, K2) to the second segment (S2) after the change in the two contact arrangements (K1, K2).

7. Method according to claim 5 or 6, wherein the slave modem (SM1, SM2), which is connected to the contact arrangement (K1, K2) arranged to the rear in the direction of movement of the mobile network subscriber (10), identifies the segment transfer, establishes a connection with the master modem (MM2) of the second segment (SM2), and carries out a connection transfer with the slave modem (SM1, SM2), which is connected to the contact arrangement (K1, K2) arranged to the front in the direction of movement of the mobile network subscriber (10) .

8. Method according to claim 7, wherein the connection transfer is concluded after a definable waiting time, during which the two slave modems are connected to the second master modem (MM2).

9. Segment arrangement for use with a mobile network subscriber (10) according to one of claims 1 to 4, having at least one first master modem (MM1), at least one second master modem (MM2), at least one first segment (S1) and at least one second segment (S2), wherein the first master modem (MM1) supplies the first segment (S1) and the second master modem (MM2) supplies the second segment (S2).

10. Segment arrangement according to claim 9, having a PRP manager (PRP) for controlling and/or reading out the master modems (MM1, MM2) on the basis of a parallel redundancy protocol according to IEEE 62439.

11. Segment arrangement (2) according to one of claims 9 or 10, wherein the segments (S1, S2) extend lengthwise, abut one another and/or form a path (S) which is free of overlap and is interrupted at the segment boundaries.

12. Segment arrangement according to one of claims 9 to 11, wherein neutral segments (SM) which are not connected to either a master modem (MM1, MM2) or a segment (S1, S2) are arranged between the segments (S1, S2).

13. Segment arrangement according to one of claims 9 to 12, wherein terminations (T) are attached to the boundaries of the segments (S1, S2), said terminations being attached to the ends of the segments (S1, S2) and dampening signals of the segment (S1, S2), to which they are attached, in the direction of the next segment (S1, S2).

14. Segment arrangement according to one of claims 9 to 13, having a controller (CTRL), which is embodied for communicating with and for controlling a drive control (CTRL-10) of the mobile network subscriber (10).

## Revendications

1. Participant (10) mobile à un réseau à utiliser dans un réseau (1) de ligne,
dans lequel le réseau (1) de ligne a au moins un premier segment (S1) et un deuxième segment (S2),
dans lequel le participant (10) mobile au réseau a un premier modem (SM1) esclave, un deuxième modem (SM2) esclave, un premier système (K1) de contact, ainsi qu'une deuxième système (K2) de contact,
dans lequel les modems (SM1, SM2) esclaves sont prévus pour communiquer avec, respectivement, au moins un premier modem (MM1) maître et/ou un deuxième modem (MM2) maître par les systèmes (K1, K2) de contact et les segments (S1, S2), le premier modem (MM1) maître couvrant le premier segment (S1) et le deuxième modem (MM2) maître couvrant le deuxième segment (S2), le participant (10) mobile au réseau étant prévu pour se déplacer le long des segments (S1, S2),
**caractérisé en ce que**
les systèmes (K1, K2) de contact du participant (10) mobile au réseau sont disposés de manière à ce que, lors du passage du premier segment (S1) au deuxième segment (S2), au moins l'un des systèmes (K1, K2) de contact soit en liaison avec le premier segment (S1) et au moins un autre système (K1, K2) de contact avec le deuxième segment (S2).

2. Participant mobile à un réseau suivant la revendication 1, comportant un gestionnaire (PRP-S) PRP esclave, qui est constitué pour commander et/ou pour lire le modem (SM1, SM2) esclave sur la base d'un Parallel Redundancy Protocol suivant IEEE 62439.

3. Participant mobile à un réseau suivant l'une des revendications 1 ou 2, comportant un répartiteur (M-SW) de modem, qui est constitué pour établir au moins une liaison entre les systèmes (K1, K2) de contact et les modems (SM1, SM2) esclaves.

4. Participant mobile à un réseau suivant l'une des revendications 1 à 3, dans lequel les systèmes (K1, K2) de contact sont constitués chacun sous la forme d'un frotteur individuel et/ou double.

5. Procédé pour faire passer un participant mobile à un réseau suivant l'une des revendications 1 à 4 d'un premier segment (S1) à un deuxième segment (S2) d'un réseau (1) de ligne, un premier modem (MM1) maître couvrant le premier segment (S1) et un deuxième modem (MM2) maître couvrant le deuxième segment (S2),
dans lequel un modem (SM1, SM2) esclave, qui est en liaison avec le système (K1, K2) de contact monté en avant, dans le sens de déplacement du participant (10) mobile au réseau, reconnaît la transition entre segments et établit une liaison vers le modem (MM2) maître du deuxième segment (2), **caractérisé en ce que**
lors du passage du premier segment (S1) au deuxième segment (S2), au moins l'un des systèmes (K1, K2) de contact est en liaison avec le premier segment (S1) et au moins un autre système (K1, K2) de contact avec le deuxième segment (S2).

6. Procédé suivant la revendication 5, dans lequel le modem (SM1) esclave, qui est en liaison avec le système (K1, K2) de contact, disposé en avant dans le sens de déplacement du participant (10) mobile au réseau, est, après le passage des deux systèmes (K1, K2) de contact dans le deuxième segment (S2), en liaison avec le deuxième segment (S2) par les deux systèmes (K1, K2) de contact.

7. Procédé suivant la revendication 5 ou 6, dans lequel le modem (SM1, SM2) esclave, qui est en liaison avec le système (K1, K2) de contact, disposé en arrière dans le sens de déplacement du participant (10) mobile au réseau, reconnaît la transition entre les segments, établit une liaison avec le modem (MM2) maître du deuxième segment (S2) et effectue une prise en charge de la liaison avec le modem (SM1, SM2) esclave, qui est en liaison avec l'agencement (K1, K2) de contact, disposé en avant dans le sens de déplacement du participant (10) mobile au réseau.

8. Procédé suivant la revendication 7, dans lequel on met fin à la prise en charge de la liaison après un temps d'attente pouvant être fixé, pendant lequel les deux modems esclaves sont en liaison avec le deuxième modem (MM2) maître.

9. Système de segment ayant un participant (10) mobile à un réseau suivant l'une des revendications 1 à 4,
comportant au moins un premier modem (MM1) maître, au moins un deuxième modem (MM2) maître, au moins un premier segment (S1) et au moins un deuxième segment (S2), le premier modem (MM1) maître couvrant le premier segment (S1) et le deuxième modem (MM2) maître couvrant le deuxième segment (S2).

10. Système de segment suivant la revendication 9, comportant un gestionnaire (PRP) PRP de commande et/ou de lecture du modem (MM1, MM2) maître sur la base d'un Parallel Redundancy Protocol suivant IEEE 62439.

11. Système de segment suivant l'une des revendications 9 ou 10, dans lequel les segments (S1, S2) s'étendent en longueur, sont voisins l'un de l'autre et/ou forment une voie (S) interrompue aux limites des segments et/ou sans chevauchement.

12. Système de segment suivant l'une des revendications 9 à 11, dans lequel, entre les segments (S1, S2) sont disposés des segments (SN) neutres, qui ne sont pas reliés à un modem (MM1, MM2) maître et ne sont pas reliés à un segment (S1, S2).

13. Système de segment suivant l'une des revendications 9 à 12, dans lequel, aux limites des segments (S1, S2), sont mises des terminaisons (T), qui sont mises aux extrémités des segments (S1, S2) et qui amortissent (S1, S2), dans la direction du segment suivant, les signaux du segment (S1, S2) où elles sont mises.

14. Système de segment suivant l'une des revendications 9 à 13, comportant une commande (CTRL), qui est constituée pour la communication avec et pour la commande d'une commande (CTRL-10) de déplacement du participant (10) mobile au réseau.
